# EUROPEAN PATENT SPECIFICATION

(11) **EP 3 303 809 B1**
(45) Date of publication and mention of the grant of the patent: **12.05.2021**
(21) Application number: 16726091.8
(22) Date of filing: 31.05.2016
(51) Int. Cl.: F02F 7/00

(54) **APPARATUS AND METHOD OF USE OF APPARATUS FOR LOCATING COMPONENTS OF A SYSTEM**
VORRICHTUNG UND VERFAHREN ZUR VERWENDUNG DER VORRICHTUNG ZUR LOKALISIERUNG VON KOMPONENTEN EINES SYSTEMS
APPAREIL ET PROCÉDÉ D'UTILISATION D'UN APPAREIL POUR LOCALISER LES COMPOSANTS D'UN SYSTÈME

(30) Priority: 01.06.2015 GB 201509452
(43) Date of publication of application: 11.04.2018
(73) Proprietor: Jaguar Land Rover Limited, Coventry, Warwickshire CV3 4LF (GB)
(72) Inventor: IQBAL, Junaid, Coventry Warwickshire CV3 4LF (GB)
(74) Representative: Holmes, Matthew William
(86) International application number: PCT/EP2016/062237
(87) International publication number: WO 2016/193250

(56) References cited:
- EP-A1- 2 574 743
- WO-A1-2008/044621
- WO-A1-2010/022420
- WO-A1-2014/078783
- DE-A1-102008 029 026
- JP-A- H07 305 716
- US-A- 5 564 837

## Description

### TECHNICAL FIELD

The present disclosure relates to apparatus and method of use of apparatus for locating components of a system, and particularly, but not exclusively to apparatus and method of use of apparatus for locating components of a vehicle.

Aspects of the invention relate to an assembly, a method and a vehicle.

### BACKGROUND

It is known to connect or join structural components together using dowels in the form of solid rods, pins or pegs, as a connecting or joining element where the dowels are configured to be located in corresponding receptacles, such as holes, in one or more of the structural components to be connected or joined together. Dowels may be sized to be smaller than the corresponding hole to facilitate a loose fit arrangement, or to be larger than the corresponding hole in order to form a press fit or an interference fit arrangement.

Dowels and dowel holes may be used as reference locations to control the positioning of structural components and may provide for repeatability of assembly of such structural components.

It is also known to connect or join two structural components together using ring dowels which are hollow cylindrical tubes that similarly provide reference locations to control the positioning of structural elements but also allow fastening means, such as bolts, to be located through the ring dowel.

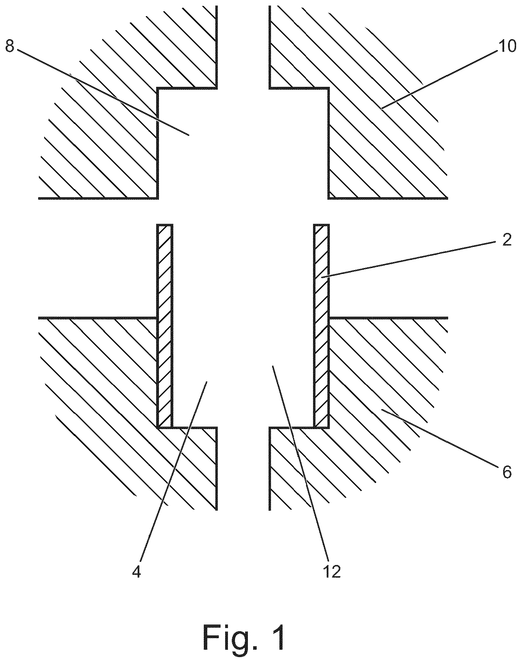

Fig. 1 shows a ring dowel 2 positioned in a receptacle 4 in a first structural component 6 and configured to be received in a second receptacle 8 in a second structural component 10. The ring dowel 2 provides a hole or aperture 12 through which bolts or other fastening means (not shown) may pass to join or fix the first structural component 6 to the second structural component 10.

For example, ring dowels may be used in the connection or joining of main bearing caps to the cylinder block of an engine. Ring dowels allow for the insertion of bolts through the ring dowels to fix a first structural component, for example the main bearing cap, to a second structural component, for example the cylinder block of an engine.

There are a number of problems associated with the use of dowels, and in particular the use of ring dowels as shown in the arrangement shown in Fig. 1.

There is a high cost involved in producing machined ring dowels for accurate positioning or locating of components such as a main bearing cap in relation to a cylinder block. Also a number of additional machining operations are required to support the use of ring dowels. Furthermore, owing to the removal of material in the critical areas around the main bearing cap bolt hole through which the bolt load is applied to hold the main bearing cap and cylinder block together in all operating conditions, there is a reduction in the strength of the material in both the main bearing cap and cylinder block.

Additional assembly operations are required to assemble dowels into the structural components to be joined or connected. For example, additional assembly operations are required to assemble ring dowels into a main bearing cap and to assemble the dowelled main bearing cap into the cylinder block.

The insertion of the ring dowel itself may cause added stress in the main bearing cap and cylinder block because of the forces exerted in the press fit or interference fit required to retain the ring dowel in situ in the components. Furthermore, the press fit or interference fit of the ring dowel may present difficulties in removing the dowels on disassembly.

It is an aim of the present invention to address disadvantages associated with the prior art.

In DE102008029026, an engine has crankcase bearing parts, where one of the bearing parts has an upper bearing block half and a lower bearing block half for a crankshaft, and the other bearing part lies against the former bearing part along a separating plane. The former bearing part has projections, which project over the plane and engage in recesses of the other bearing part. The latter bearing part is formed as a bed plate. A pair of opposite surfaces of the projections and the recesses running parallel to an axis of rotation of the crankshaft is formed as fitting surfaces.

In US5564837, a main bearing structure for an internal combustion engine includes a cylinder block with main bearing bulkheads which are bored for receiving cylindrical alignment elements carried in a main bearing cap assembly. The cylindrical alignment elements and the bores formed in the cylinder block are not concentric, with the result that a majority of the cylindrical alignment elements extending into the cylinder block are in interference fit with the cylinder block itself.

In WO2008/044621, a structure is described for supporting a crankshaft of an internal combustion engine by using a crank cap as a bearing member assembled to a cylinder block. The crank cap is constructed from two split elements split in the direction of both sides of the cylinder block. With the cap elements assembled to the cylinder block, there is a gap with a distance between those end faces of the cap elements that face each other. The gap does not allow the end faces to be in contact with each other in an actual use environment of the internal combustion engine.

In WO2014/078783, a component is adapted for contact with a mating component during attachment of the components to one another to form a related assembly in which a deformable pad or pads improve stress distribution. The component includes a body having an interface surface in which the body is adapted to be contacted with the mating component at the interface surface of the body. One or more deformable pads are formed in the interface surface. Each deformable pad has a top surface that is offset outwardly from the interface surface relative to the body and a groove surrounding the deformable pad that is offset inwardly from the interface surface relative to the body.

### SUMMARY OF THE INVENTION

Aspects of the present invention relate to, an assembly, a method and a vehicle as claimed in the appended claims.

According to an aspect of the invention there is provided an assembly comprising one or more bearing caps and a cylinder block, wherein each bearing cap comprises:
receiving means for receiving a crankshaft bearing;
contact means for, in use, contacting the cylinder block, and
at least two projection means extending from the contact means for, in use, positioning the bearing cap on the cylinder block for attachment,
wherein each of the projection means comprises an externally facing contact surface and an internally facing non-contact surface,
wherein the externally facing contact surface comprises at least a first face of the projection means which is configured to face away from the receiving means, and the internally facing non-contact surface comprises at least a second and distinct face of the projection means which is configured to face towards the receiving means, and
the externally facing contact surface is dimensioned to, in use, contact a different receptacle of the cylinder block when positioning the bearing cap on the cylinder block for attachment, and the internally facing non-contact surface is dimensioned such that, in use, it does not contact the respective receptacle of the cylinder block when positioning the bearing cap on the cylinder block for attachment, and
the externally facing contact surface comprises at least a first portion and second portion such that, for any two projection means separated by the receiving means, the separation of at least the first portion of each externally facing contact surface is smaller than the separation of outer extremities of the receptacles in which, in use, the projection means are received, and the separation of at least the second portion of each externally facing contact surface is larger than the separation of the outer extremities of the receptacles in which, in use, the projection means are received and
wherein the cylinder block comprises:
   a cylinder block contact surface for abutment to the or each contact means, and for each of the one or more bearing caps, at least two receptacles in the cylinder block contact surface, for receiving the at least two projection means extending from the contact means.

It will be understood that the non-contact surface being dimensioned such that, in use, it does not contact the respective receptacle of the cylinder block means that there when assembled there is a clearance between the non-contact surface and the receptacle, i.e. they are maintained in spaced relationship.

This provides the advantage of reducing the forces experienced by the projection means. In particular, it provides the advantage of reducing the forces experienced by the projection means during operation or use of the engine to which the bearing cap and cylinder block form a part, by allowing uneven thermal expansion between the bearing cap and the cylinder block whilst preventing or minimising the transmission of shear forces to the projection means.

The receiving means may comprise a crankshaft bearing receiving portion, for example a recess. The contact means may comprise a bearing cap contact surface. The projection means may comprise pegs, bosses or other projections from the bearing cap contact surface.

Each of the externally facing contact surfaces is dimensioned, in use, to simultaneously contact a different receptacle of the cylinder block when positioning the bearing cap on the cylinder block for attachment, and each of the internally facing non-contact surfaces is dimensioned such that, in use, they simultaneously do not contact the respective receptacle of the cylinder block when positioning the bearing cap on the cylinder block for attachment.

The separation of at least a first portion of each of the externally facing contact surfaces of the at least two projection means may be smaller than the separation of outer extremities of the receptacles, in use, in which the projection means are received, and the separation of at least a second portion of each of the externally facing contact surfaces of the at least two projection means may be larger than the separation of the outer extremities of the receptacles in which, in use, the projection means are received. The first portion may be distal from the contact means and the second portion may be proximal to the contact means.

This provides the advantage of providing an interference fit arrangement to provide more accurate positioning of components.

The projection means may be tapered from a larger cross section at an interface with the contact means, to a smaller cross section at a free end of the projection means.

This provides the advantage of facilitating the guided insertion of the projection means into the respective receptacles.

The projection means may be integral with the contact means.

This provides the advantage of reducing production cost, as the projection means are formed in the same process as that for forming the rest of the bearing cap. Further, this provides the advantage of reducing stress in the bearing cap compared to using separate components in an interference fit arrangement. Also, this provides the advantage of reducing the number of assembly steps in particular by providing the integral projection means rather than requiring the assembly of a dowel to a bearing cap.

The projection means may be integrally formed with the bearing cap by machining the contact means. The projection means may be integrally formed with the bearing cap by sintering.

The density of the projection means is higher than the density of a body portion of the bearing cap.

This provides the advantage of providing a harder projection means to resist any forces experienced during the insertion of the projection means into the receptacle and during operation of the engine to which the bearing cap and hence projection means form a part.

The bearing cap may be formed of steel or iron.

This has the advantage that, since aluminium has a lower hardness than steel or iron, during the process of connecting the bearing cap to the cylinder block the aluminium material of the cylinder block is plastically deformed in preference to the iron or steel of the projection means of the bearing cap, thus forming a seat or groove conforming to the shape of the projection means in the contact region of the cylinder block.

The contact point between each of the projection means and the respective receptacle, when positioning the bearing cap on the cylinder block for attachment, may be at a point on each of the projection means, between a base of the projection means at the interface with the contact surface and the free end of the projection means.

The bearing cap may comprise a void which, in use, receives material displaced from a contact point on the cylinder block.

This has the advantage that as the contact means is brought into abutment with the cylinder block that the material of the cylinder block will be locally distorted to provide an exact size on size fit and, thereby providing a robust and repeatable location mechanism.

The at least two receptacles may each comprise a stepped recess having a a first section extending into the cylinder block from the cylinder block contact surface to a first depth and a second section extending further into the cylinder block from a base of the first section, the second section having a smaller cross section than the first section.

The first section and the second section may be circular in cross section.

The stepped recess may be substantially orthogonal to the cylinder block contact surface.

The second section may be coaxial with the first section.

The externally facing contact surface of each of the at least two projection means may contact a respective receptacle at an interface contact point comprising a lip between the first section and the second section.

This has the advantage of moving the contact point away from the shear plane between the bearing cap and the cylinder block, thus reducing the forces acting on the projection means in use.

The cylinder block may be formed of aluminium or aluminium alloy.

The bearing cap may comprise a harder material than that of the cylinder block.

This provides the advantage of, upon application of a load on the bearing cap through the introduction and tightening of bolts to connect the bearing cap to the cylinder block, or through an assembly press, forcing, by pushing or pulling, the projection means of the bearing cap into the receptacle in the cylinder block. This may cause the cylinder block material, at the point of contact between the projection means and the receptacle, in particular at the edge of the receptacle, to yield or plastically deform to form a seat or groove conforming to the shape of the projection means in the contact region.

The material of the bearing cap may have a lower thermal expansion coefficient than the material of the cylinder block that it is to be abutted.

According to a another aspect of the invention there is provided a method of assembling the assembly described in any of the preceding paragraphs, the method comprising: locating the at least two projection means extending from the contact means into the respective receptacles of the cylinder block such that each of the externally facing contact surfaces of the at least two projection means contact the respective receptacle of the cylinder block at a contact point and that each of the internally facing contact surfaces of the at least two projection means are separated from the respective receptacle of the cylinder block, and applying force to the bearing cap to cause the contact means and cylinder block contact surface to abut such that each of the at least two projection means are forced further into the respective receptacle of the cylinder block, causing displacement of material from the receptacle at the contact point.

The material displaced from the contact point may be displaced to a void adjacent to the contact point.

The contact point may be below the cylinder block contact surface. This has the advantage of moving the contact point away from the shear plane between the bearing cap and the cylinder block, thus reducing the forces on the cylinder block contact surface and the forces acting on the projection means in use.

According to a further aspect of the invention there is provided a vehicle comprising an assembly as described in any preceding paragraph.

According to a still further aspect of the invention there is provided a bearing cap for attachment to a cylinder block, the bearing cap comprising: a crankshaft bearing receiving portion for receiving a crankshaft bearing; a bearing cap contact surface for, in use, contacting the cylinder block, and at least two pegs projecting from the bearing cap contact surface for, in use, positioning the bearing cap on the cylinder block for attachment, wherein each of the at least two pegs comprises an externally facing contact surface each of which is configured, in use, to contact a different receptacle of the cylinder block when positioning the bearing cap on the cylinder block for attachment, and an internally facing non-contact surface each of which is configured such that, in use, it does not contact the respective receptacle of the cylinder block when positioning the bearing cap on the cylinder block for attachment.

Each of the externally facing contact surfaces may be configured, in use, to simultaneously contact a different receptacle of the cylinder block when positioning the bearing cap on the cylinder block for attachment, and each of the an internally facing non-contact surfaces may be configured such that, in use, they simultaneously do not contact the respective receptacle of the cylinder block when positioning the bearing cap on the cylinder block for attachment

According to a still further aspect of the invention there is provided a bearing cap for attachment to a cylinder block, the bearing cap comprising: a crankshaft bearing receiving portion for receiving a crankshaft bearing; a bearing cap contact surface for, in use, contacting the cylinder block, and at least two relief elements at the bearing cap contact surface for, in use, positioning the bearing cap on the cylinder block for attachment, wherein each of the at least two relief elements comprises an externally facing contact surface each of which is configured, in use, to contact a different cooperating relief element of the cylinder block when positioning the bearing cap on the cylinder block for attachment, and an internally facing non-contact surface each of which is configured such that, in use, it does not contact the respective cooperating relief element of the cylinder block when positioning the bearing cap on the cylinder block for attachment.

Each of the externally facing contact surfaces may be configured, in use, to simultaneously contact a different cooperating relief element of the cylinder block when positioning the bearing cap on the cylinder block for attachment, and each of the internally facing non-contact surfaces may be configured such that, in use, they simultaneously do not contact the respective cooperating relief element of the cylinder block when positioning the bearing cap on the cylinder block for attachment.

According to a still further aspect of the invention there is provided an apparatus for attachment to a structure, the apparatus comprising: a contact surface, and at least two pegs projecting from the contact surface for, in use, positioning the apparatus on the structure for attachment, wherein each of the at least two pegs comprises a first contact surface each of which is configured, in use, to contact a different receptacle of the structure when positioning the apparatus on the structure for attachment, and a second non-contact surface each of which is configured such that, in use, it does not contact the respective receptacle when positioning the apparatus on the structure for attachment, each of the first contact surfaces being positioned to be distal from a heat source and each of the second contact surfaces being positioned to be proximal to a heat source.

Each of the first contact surfaces may be configured, in use, to simultaneously contact a different receptacle of the structure when positioning the apparatus on the structure for attachment, and each of the second non-contact surfaces may be configured such that, in use, they simultaneously do not contact the respective receptacle when positioning the apparatus on the structure for attachment.

According to a still further aspect of the invention there is provided an apparatus for attachment to a structure, the apparatus comprising: a contact surface, and at least two relief elements at the contact surface for, in use, positioning the apparatus on the structure for attachment, the two relief elements being separated by a gap, wherein each of the at least two relief elements comprises an externally facing contact surface each of which is configured, in use, to contact a different cooperating relief element of the structure when positioning the apparatus on the structure for attachment, and an internally facing non-contact surface each of which is configured such that, in use, it does not contact the respective cooperating relief element of the structure when positioning the apparatus on the structure for attachment, and wherein the externally facing contact surface faces away from the gap and the internally facing non-contact surface faces towards the gap.

Each of the externally facing contact surfaces may be configured, in use, to simultaneously contact a different cooperating relief element of the structure when positioning the apparatus on the structure for attachment, and each of the internally facing non-contact surfaces may be configured such that, in use, they simultaneously do not contact the respective cooperating relief element of the structure when positioning the apparatus on the structure for attachment.

### BRIEF DESCRIPTION OF THE DRAWINGS

One or more embodiments of the invention will now be described, by way of example only, with reference to the accompanying drawings, in which:
Fig. 1 illustrates an example of a ring dowel arrangement;
Fig. 2 illustrates an example of a main bearing cap;
Fig. 3 illustrates an example of an assembly;
Fig. 4 illustrates an example of an assembly;
Fig. 5 illustrates an example of a main bearing cap in an assembly;
Fig. 6 illustrates an example of a main bearing cap in an assembly;
Fig. 7 illustrates a perspective view of an example of a main bearing cap;
Fig. 8 illustrates a perspective view of an example of a projection means;
Fig. 9 illustrates a side view of the projection means of Fig. 8;
Fig. 10 illustrates an example of an assembly;
Fig. 11 illustrates an example of a method of assembling an assembly;
Fig. 12 illustrates an example of a vehicle.

### DETAILED DESCRIPTION

Examples of the present disclosure relate to means for locating a bearing cap, for example a main bearing cap, on a cylinder block to facilitate the retention of a crankshaft in the crank-bore which is formed between the bearing cap and the cylinder block.

A technical effect of at least some examples of the disclosure is that an arrangement can be formed during the first time that the bearing cap and the cylinder block are joined, connected or fixed together, by the plastic deformation of the cylinder block material which is in contact with projection means, such as location pegs or location peg features, extending from a contact means, such as a bearing cap contact surface, of the bearing cap. This arrangement, so formed, then provides an exact sized seating or formation in the cylinder block for the bearing cap, thus increasing the repeatability of accurately repositioning the bearing cap on the cylinder block after the bearing cap has been removed from the cylinder block.

It is to be understood that shear forces are formed at the contact faces or the contact surfaces of the bearing cap and the cylinder block when the engine, to which the bearing cap and the cylinder block are part of, is in use. Such shear forces are introduced by the difference in thermal expansion of the relative materials of the bearing cap and the cylinder block.

Typically the bearing cap will be formed of material which exhibits lower thermal expansion than the cylinder block. For example the cylinder block may be aluminium or an aluminium alloy, for example AISi8Cu3, a magnesium alloy or a magnesium-aluminium alloy and the bearing cap may be iron or steel. However, different grades of the same material may exhibit different thermal expansion and different hardness and therefore may also exhibit shear forces at a contact face or contact surface. The bearing cap may be, for example, formed by sintering powdered metal.

A technical effect of at least some examples of the disclosure is that the shear forces which are transmitted to projection means, such as location pegs, from the contact face or surface of the bearing cap and cylinder block are reduced or eliminated, such that the likelihood of damage to the projection means, which are used to locate the bearing cap on the cylinder block as will be described in the following paragraphs, is reduced or eliminated.

The figures illustrate, at least, a bearing cap 14 for attachment to a cylinder block 16, the bearing cap 14 comprising: receiving means 18 for receiving a crankshaft bearing (not shown); contact means 20 for, in use, contacting the cylinder block 16, and at least two projection means 22, 24 extending from the contact means 20 for, in use, positioning the bearing cap 14 on the cylinder block 16 for attachment, wherein each of the projection means 22, 24 comprises an externally facing contact surface 26, 28 each of which is dimensioned, in use, to contact a different receptacle 46, 48 of the cylinder block 16 when positioning the bearing cap 14 on the cylinder block 16 for attachment, and an internally facing non-contact surface 30, 32 each of which is dimensioned such that, in use, it does not contact the respective receptacle 46, 48 of the cylinder block 16 when positioning the bearing cap 14 on the cylinder block 16 for attachment.

The projection receiving means 46, 48, may be in the form of receptacles 46, 48 of the cylinder block 16.

The non-contact surface 30, 32 may be dimensioned to be separated from the respective receptacles 46, 48.

Each of the externally facing contact surfaces 26, 28 is dimensioned, in use, to simultaneously contact a different projection receiving means 46, 48, in the form of receptacles 46, 48 of the cylinder block 16 when positioning the bearing cap 14 on the cylinder block 16 for attachment, and each of the internally facing non-contact surfaces 30, 32 are dimensioned such that, in use, they simultaneously do not contact the respective receptacle 46, 48 of the cylinder block 16 when positioning the bearing cap 14 on the cylinder block 16 for attachment.

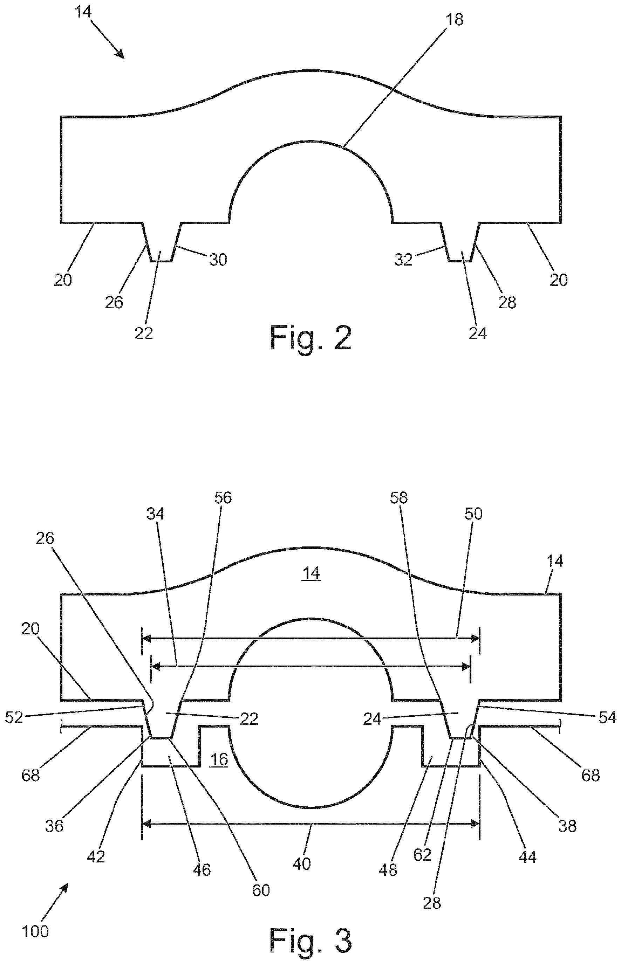

Fig. 2 illustrates a side on view of an example bearing cap 14 for attachment to a cylinder block 16 (not shown in Fig. 2, but shown in Figs. 3 to 6). The bearing cap 14 comprises a receiving means 18 in the form of a crankshaft bearing receiving portion 18, which is a portion of the bearing cap 14, which retains a crankshaft bearing such that, in use, the crankshaft rotates within the crankshaft bearing which is held within the crankshaft bearing receiving portion 18. The bearing cap 14 also comprises contact means 20 in the form of a bearing cap contact surface 20. This bearing cap contact surface 20 is abutted to a cylinder block contact surface 68 (not shown in Fig. 2, but shown in Figs. 3 to 6), in use, and in particular to a contact surface of the crankcase.

Both the bearing cap 14 and the cylinder block 16 retain crankshaft bearings, in use, through which the crankshaft (not shown) is retained, to rotate during operation of the engine of the vehicle in which the arrangement is located.

In the example of Fig. 2, two projection means 22, 24, in the form of pegs 22, 24, for example location pegs, project or protrude from the bearing cap contact surface 20. However, other embodiments may have more than two pegs 22, 24. In such embodiments, with more than two pegs 22, 24, each of the pegs 22, 24 is dimensioned or configured to be received in or simultaneously contact a different receptacle 46, 48 of the cylinder block 16 when positioning the bearing cap 14 on the cylinder block 16. Therefore, in an assembly of a bearing cap 14 and cylinder block 16, the cylinder block 16 will comprise, at least, a corresponding number of receptacles 46, 48 to the number of pegs 22, 24 on the bearing cap 14, for receiving the pegs 22, 24 of the bearing cap 14.

In some examples one peg 22, 24 is located on each side of the crank-bore, though in other examples more than one peg 22, 24 can be located on each side of the crank-bore. Therefore at least one peg 22, 24 may be located on each side of the crank-bore. The main bearing cap bolt holes may also be located on either side of the crank-bore. These main bearing cap bolt holes facilitate the insertion of bolts to connect the bearing cap 14 and cylinder block 16 together. Furthermore, in some examples at least one peg 22, 24 is located outboard of the main bearing cap bolt hole, with respect to the crank-bore. That is, the pegs, 22, 24 are further away from the crankshaft bearing receiving portion 18 than the main bearing cap bolt holes.

Thus the use of pegs 22, 24, as location means for locating the bearing cap 14 on the cylinder block 16, separate to any bolt hole connection for the bearing cap 14 and cylinder block 16, means that they can be advantageously placed anywhere on the bearing cap 14. Furthermore, they can be produced to a much smaller size as they are not required to be placed around the main bearing cap bolt holes.

However, in other examples, the main bearing cap bolt holes can be formed through the pegs 22, 24 to form an integral location and fixing arrangement.

In some examples, an assembly 100 comprises one or more bearing caps 14 and a cylinder block 16, wherein the cylinder block 16 comprises a cylinder block contact surface 68 for abutment to the or each bearing cap contact surface 20, and, for each of the one or more bearing caps 14, at least two receptacles 46, 48 in the cylinder block contact surface 68, for receiving the at least two pegs 22, 24 projecting from the bearing cap contact surface 20.

Fig. 3 illustrates a side on view of an example bearing cap 14 for attachment to a cylinder block 16. In Fig. 3 the cylinder block 16 comprises two receptacles 46, 48, each of which, in use, contains a peg 22, 24. The receptacles 46, 48 are holes, recesses or apertures in the cylinder block contact surface 68, and are generally blind holes, recesses or apertures. The receptacles 46, 48 in Fig. 3 are orthogonal to the cylinder block contact surface 68 and have straight parallel sides. Such receptacles 46, 48 may be drilled into the cylinder block 16 during manufacture or cast into the cylinder block 16 during manufacture. In alternative embodiments, the receptacles 46, 48 may have tapered, non-parallel sides. In Fig. 3, the bearing cap 14 has been positioned such that the location pegs 22, 24 are within the receptacles 46, 48 but are not in contact with any surface of the receptacles 46, 48 or the cylinder block contact surface 68.

In the example of Fig. 3, the separation 34 of at least a first portion 36, 38 of each of the externally facing contact surfaces 26, 28 of the at least two pegs 22, 24 of the bearing cap 14 is smaller than the separation 40 of outer extremities 42, 44 of the receptacles 46, 48 in which the pegs 22, 24 are received, and the separation 50 of at least a second portion 52, 54 of each of the externally facing contact surfaces 26, 28 of the at least two pegs 22, 24 of the bearing cap 14 is larger than the separation 40 of the outer extremities 42, 44 of the receptacles 46, 48 in which the pegs 22, 24 are received. In the example of Fig. 3, the first portion 36, 38 is distal from the bearing cap contact surface 20 and the second portion 52, 54 is proximal to the bearing cap contact surface 20.

The pegs 22, 24 are therefore tapered from a larger cross section at an interface 56, 58 with the bearing cap contact surface 20, to a smaller cross section at a free end 60, 62 of the pegs 22, 24. The free end 60, 62 of the pegs 22, 24, is that end which is distal from an interface 56, 58 with the bearing cap contact surface 20.

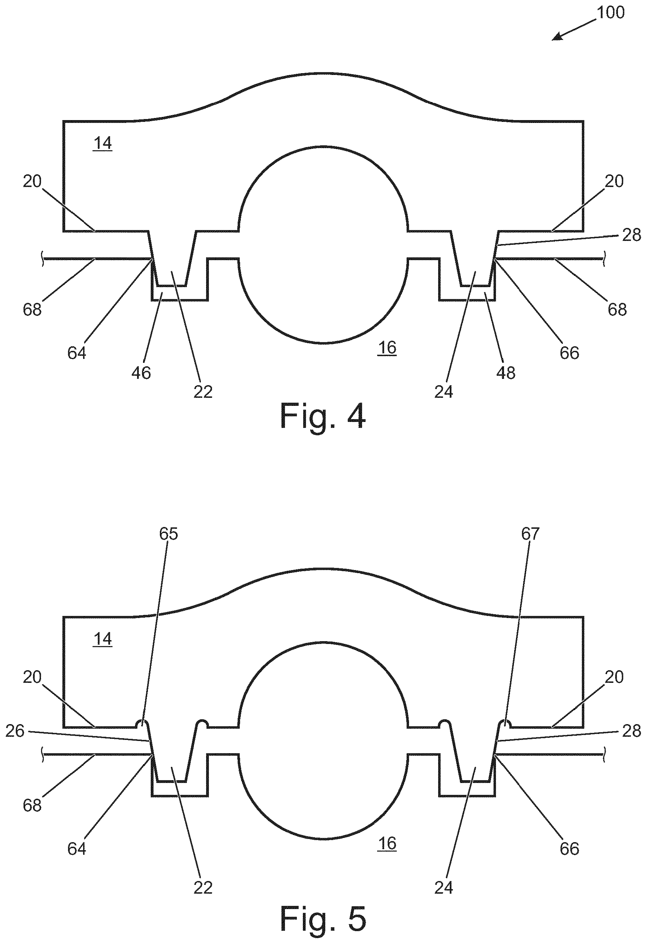

Fig. 4 illustrates a side on view of an example bearing cap 14 for attachment to a cylinder block 16. In Fig. 4, the bearing cap 14 has been moved to be in contact with the cylinder block 16. In particular, the pegs 22, 24 of the bearing cap 14 have been brought into contact with the cylinder block 16. The contact point 64, 66 on the cylinder block 16 is at the cylinder block contact surface 68, and in particular at the location on the cylinder block contact surface 68 where the receptacles 46, 48 are located. In particular the contact point 64, 66 is at a location where the cylinder block contact surface 68 and the receptacles 46, 48 converge, join or meet.

In Fig. 4, the boundary between the cylinder block contact surface 68 and a sidewall of the receptacle 46, 48 is a ninety degree turning or junction, formed by the drilling or casting of the receptacles 46, 48 in the cylinder block 16. However, in other embodiments, where the receptacles 46, 48 may be of a tapered form, the boundary between the cylinder block contact surface 68 and a sidewall of the receptacle 46, 48 may form another angle.

Fig. 5 illustrates a side on view of an example bearing cap 14 for attachment to a cylinder block 16. In the example of Fig. 5, each of the pegs 22, 24 are formed with a channel, groove or moat 65, 67 around its base. If the pegs 22, 24 are circular in cross section, then the channel, groove or moat 65, 67 may be of radial form. In particular, the channels 65, 67 are formed at the interface between the bearing cap contact surface 20 and the pegs 22, 24. The function of the channel 65, 67 is to receive material deformed at the contact point 64, 66, from the cylinder block 16, upon the bearing cap 14 and cylinder block 16 being moved closer together. Because the material of the bearing cap 14 is harder than that of the cylinder block 16, the material of the cylinder block 16 is deformed in preference to that of the bearing cap 14, and in particular to that of the pegs 22, 24 of the bearing cap 14. The material of the cylinder block 16 thereby displaced from the contact point 64, 66 moves into the channel 65, 67 for retention, and provides a permanent size on size fitting between the bearing cap 14 and the cylinder block 16.

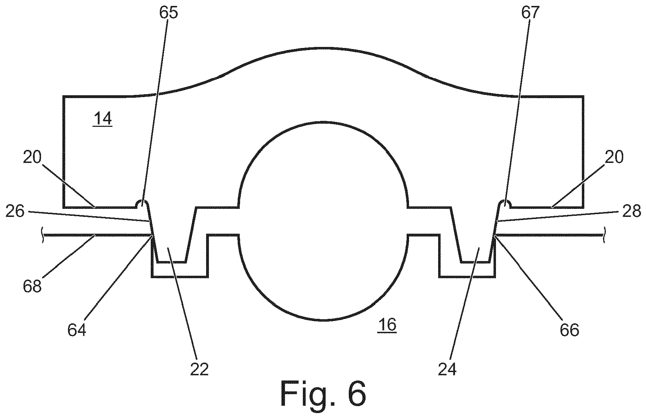

In the example of Fig. 5, the channel 65, 67 is formed around the perimeter or circumference of the base of the pegs 22, 24. In an alternative example, shown in Fig 6, the channel 65, 67 is formed only around a portion of the perimeter or circumference of the base of the pegs 22, 24. This portion may correspond to the portion of the pegs 22, 24 which is dimensioned or configured to contact the interface 56, 58 between the bearing cap 14 and the cylinder block during fixing of the bearing cap 14 to the cylinder block 16. This portion is substantially around the externally facing contact surface 26, 28

In various examples, the pegs 22, 24 may be of a frustoconical shape or a semi frustoconical shape. The pegs 22, 24 may for example have straight sides to form a frustoconical shape, or have sides which vary in gradient from the base, at the interface 56, 58 with the bearing cap contact surface 20, to the free end 60, 62. In some examples, where the cross section of the pegs 22, 24 is circular, the interface between the pegs 22, 24 and the bearing cap contact surface 20 has an upper major diameter (UMD) and the free end has a lower minor diameter (LMD). The upper major diameter is termed the gauge level at which the maximum interference engagement (MIE) will occur between the pegs 22, 24 and the receptacles 46, 48.

The cross section of the pegs 22, 24 may be any suitable shape or form. For example, the cross section of the pegs 22, 24 may be circular, semi-circular, a circular segment, i.e., a circle bounded by a chord and the arc subtended by the chord, oval, semi-oval, any other shape, or a combination thereof.

For example the free end 60, 62 of the pegs 22, 24 may be of semi-circular cross section whereas the cross section at the interface 56, 58 with the bearing cap contact surface 20 may be circular or a circular segment, with the cross section in between being of an intermediate shape between. In the cross sections shown in Figs. 2 to 6, a tapered section is shown, which may be the section of a frustoconical shaped pegs 22, 24. However, other examples are envisaged with other forms of tapered section as described above.

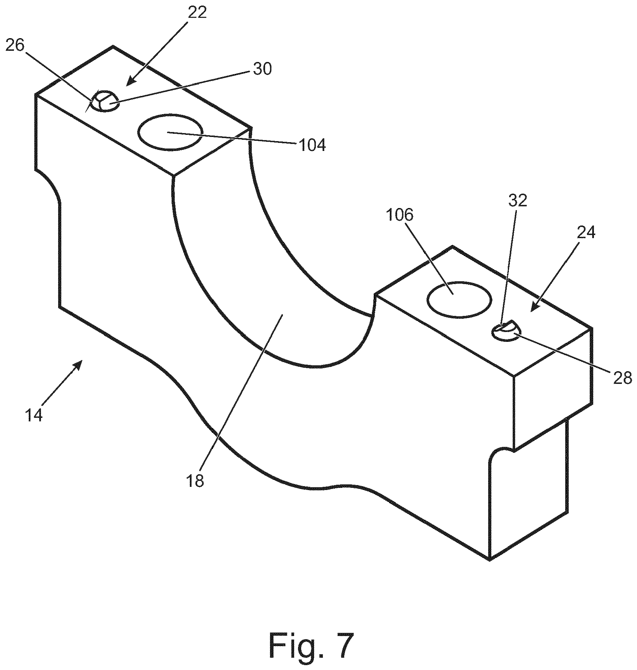

A more complex shape for the pegs 22, 24 is shown in Figs. 7 to 10, where the pegs 22, 24 have a circular or near circular cross section at the interface 56, 58 with the bearing cap contact surface 20, and a tapering profile, which tapers to a free end 60, 62 of semi-circular cross section. The intermediate cross sections are of the form of circular segments of decreasing diameter with the chord increasingly positioned towards the diameter of the circular segment further away from the bearing cap contact surface 20. The face defined by the chord at the chorded circular segments provides a non-contact surface of the pegs 22, 24. In other examples, different faces may be defined, which are dimensioned or configured to be a non-contact surface with regards to the receptacles 46, 48 into which the pegs 22, 24 are to be located, in use.

Fig. 7 illustrates an example bearing cap 14 having pegs 22, 24 with an externally facing contact surface 26, 28 and an internally facing non-contact surface 30, 32. The externally facing contact surfaces 26, 28 face away from the receiving means 18, which is a crankshaft bearing receiving portion 18. The bearing cap 14 of Fig. 7 also has bolt holes 104, 106, which are holes or apertures for receiving connecting means (not shown), such as bolts, for affixing the bearing cap 14 to the cylinder block 16. The bolts are used to apply a load, for example a clamp load, when the bolts are tightened. The load acts on the bearing cap 14.

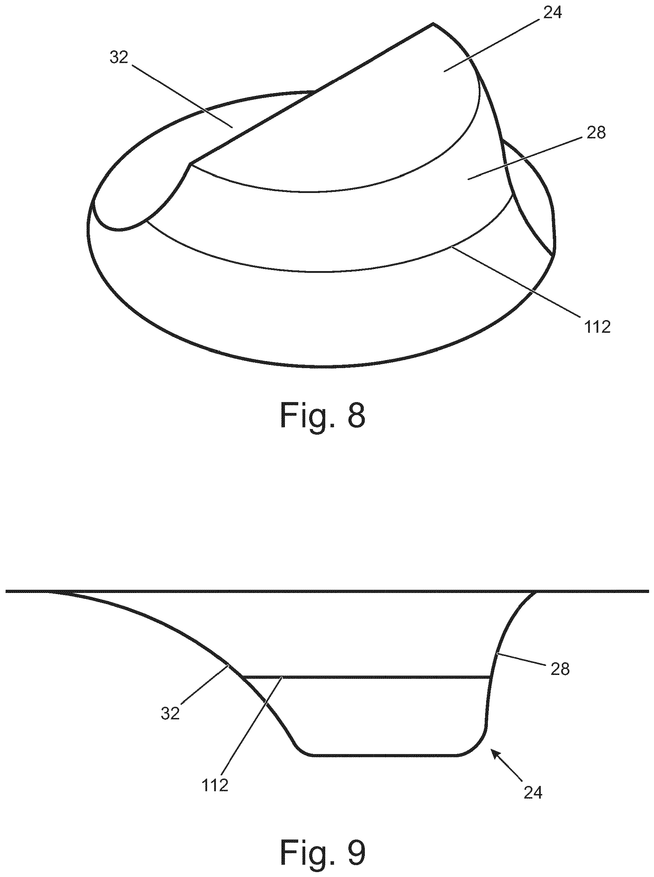

Fig. 8 illustrates an expanded view of one of the pegs 24 of Fig. 7. The peg 24 in Fig. 8 has an externally facing contact surface 28 and an internally facing non-contact surface 32. The other one of the pegs 22, has the same form in mirror to that of peg 24 in Fig. 7. However, in other examples, the two pegs 22, 24 may have different forms, but retain at least an externally facing contact surface 26, 28, and an internally facing non-contact surface 30, 32. Fig. 9, shows a side view of the projection 24 of Fig. 8.

Level 112, illustrated in Figs. 8 and 9 is a level, up to which the peg can be freely inserted in receptacles 46, 48. Therefore the level 112 forms the start of interference engagement (SIE) level, as will be discussed below.

The pegs 22, 24 are integral with the bearing cap contact surface 20. In some examples the pegs 22, 24 are integrally formed with the bearing cap 14 by machining the bearing cap contact surface 20. In some examples, the pegs 22, 24 are integrally formed with the bearing cap 14 by sintering powdered metal. Other methods of integrally forming the pegs 22, 24 with the bearing cap contact surface 20 may be suitable.

The bearing cap may comprise a body, having a crankshaft bearing receiving portion 18 in the form of a recess for receiving a crankshaft bearing through which the crankshaft is disposed, in use, and at least two pegs 22, 24. In some examples the density of the pegs 22, 24 may be higher than the density of a body of the bearing cap 14.

In some examples the bearing cap 14 is formed of sintered material, for example by sintering powdered metal, wherein the bearing cap 14 is formed using a punch and die arrangement. In some examples a higher density for the pegs 22, 24 may be produced by providing a second punch in the punch and die arrangement to further compact, or over-compact, the material to form the pegs 22, 24.

In some examples the bearing cap 14 comprises a harder material than that of the cylinder block 16. The bearing cap 14 may be for example, formed of steel or iron. The cylinder block 16, or at least a part of the cylinder block 16 to which the pegs 22, 24 of the bearing cap 14 are dimensioned or configured to contact, in use, may be formed of aluminium or an aluminium alloy, for example AISi8Cu3, a magnesium alloy or a magnesium-aluminium alloy. In other examples, other materials may be used, providing the hardness of the bearing cap 14 is greater than the hardness of the cylinder block 16 or part of the cylinder block 16 to which the pegs 22, 24 of the bearing cap 14 are dimensioned or configured to contact, in use.

The contact point 64, 66 (see for example Figs. 4 to 6) or location between each of the pegs 22, 24 and the respective receptacle 46, 48, when positioning the bearing cap 14 on the cylinder block 16 for attachment, is at a point between a base of the pegs 22, 24 at the bearing cap contact surface 20 and the free end 60, 62 of the pegs 22, 24. This contact location may be called the start of interference engagement (SIE) level. Inserting the pegs 22, 24 into the receptacle 46, 48 beyond this contact point 64, 66 constitutes an interference fit between the bearing cap 14 and the cylinder block 16. The pegs 22, 24 may be pushed into the receptacles 46, 48 up to the maximum interference level (MIE), which is the gauge level, at which point the bearing cap contact surface 20, also called the bearing cap mating face, abuts or is seated upon, the cylinder block contact surface 68.

In some examples, the bearing cap 14 has a lower thermal expansion coefficient than the cylinder block 16 that it is to be connected to. Therefore, when an increased temperature is experienced by both the bearing cap 14 and cylinder block 16, the bearing cap 14 will increase less in dimensions than the cylinder block 16. This difference in thermal expansion leads to shear stresses at the abutment, or mating face, between the bearing cap contact surface 20 and the cylinder block contact surface 68, and in particular to increased shear stresses upon increasing thermal expansion..

In example assemblies, the cylinder block 16 may comprise at least two receptacles 46, 48 each for receiving pegs 22, 24 projecting or protruding from the bearing cap contact surface 20.

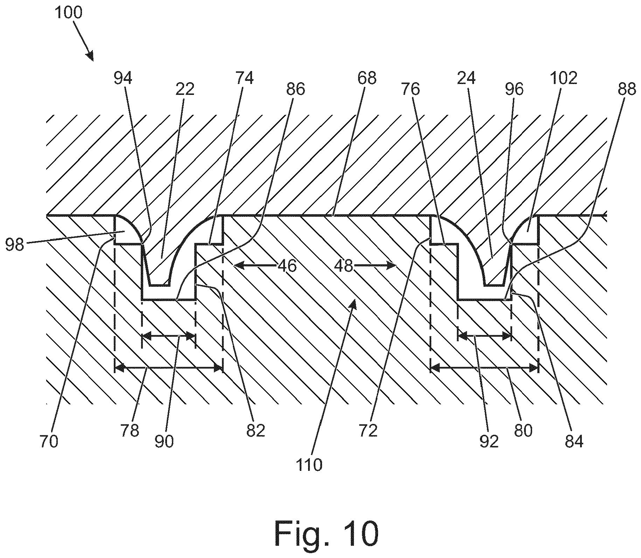

In some examples, as illustrated in Fig. 10, each of the receptacles 46, 48 extends orthogonal, orthogonal to or orthogonally from the cylinder block contact surface 68 into the cylinder block 16, in other words perpendicular to the cylinder block contact surface. The two receptacles therefore comprise a stepped recess. The stepped recess may be substantially orthogonal to the cylinder block contact surface 68. Each of the receptacles 46, 48 has a first section 70, 72 extending into the cylinder block 16 from the cylinder block contact surface 68 to a first depth 74, 76. In some examples, where the cross section of the first section 70, 72 is circular, the first section has a first diameter 78, 80. Each of the receptacles 46, 48 has a second section 82, 84 extending further into the cylinder block from a base of the first section 70, 72. The second section 82, 84 may have a smaller cross section than the first section (70, 72). In some examples the second section 82, 84 extends from the first depth 74, 76 to a second larger depth 86, 88 and, where the cross section of the second section 82, 84 is circular, having a second diameter 90, 92 smaller than the first diameter 78, 80. This forms a countersunk arrangement for the pegs 22, 24 to be received within. In some examples, the second section 82, 84 may be coaxial with the first section 70, 72. This may form a step with a constant or unvarying width around the circumference of the second diameter 90, 92. In some examples, the second section 82, 84 may have an offset axis such that a step formed between the first section 70, 72 and the second section 82, 84 has a variable width around the circumference of the second diameter 90, 92.

In some examples the receptacles 46, 48 may be tapered receptacles 46, 48, such that the diameter of one or more sections decreases further away from the cylinder block contact surface 68.

In the example of Fig. 10, the externally facing contact surface 26, 28 of each of the pegs 22, 24 contacts a respective receptacle 46, 48 at an interface contact point, or lip, 94, 96 between the first section 70, 72 and the second section 82, 84.

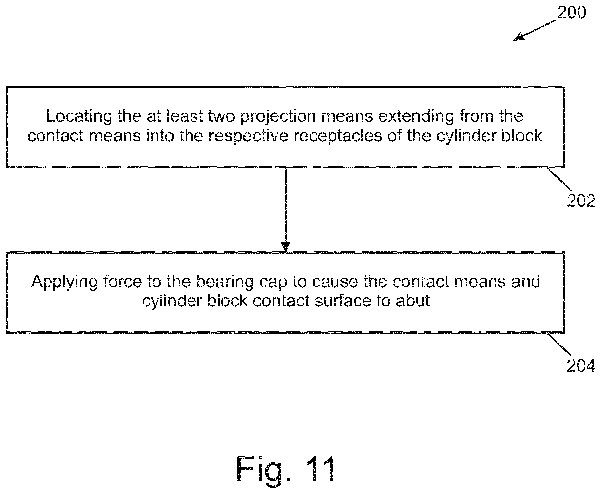

Fig. 11 illustrates an example of a method 200. The method may be performed in a manual or automated process. At block 202 the at least two pegs 22, 24 extending from the bearing cap contact surface 20 are located into the respective receptacles 46, 48 of the cylinder block 16 such that each of the externally facing contact surfaces 26, 28 of the at least two pegs 22, 24 contact the respective receptacle 46, 48 of the cylinder block 16 at a contact point 64, 66 or region and that each of the internally facing contact surfaces 30, 32 of the at least two pegs 22, 24 are separated from the respective receptacle 46, 48 of the cylinder block 16.

At block 204, force is applied to the bearing cap 14 to cause the bearing cap contact surface 20 and cylinder block contact surface 68 to abut such that each of the at least two pegs 22, 24 are forced further into the respective receptacle 46, 48 of the cylinder block 16, causing displacement of material from the receptacle 46, 48 at the contact point 64, 66 or region.

In the process of attaching the bearing cap 14 to the cylinder block 16, as described above, material will be displaced from the cylinder block 16, as the cylinder block 16 comprises softer material than the bearing cap 14. Material displaced from the contact point 64, 66 or region is displaced to a void 65, 67 adjacent to the contact point 64, 66 or region. In the examples in Figs. 5 and 6, the void 65, 67 may be a channel, groove or moat dimensioned or configured to receive the displaced material. Such examples have the contact point 64, 66 between the pegs 22, 24 and the receptacles at the cylinder block contact surface 68.

In the example of Fig. 10, the interface contact point 94, 96 is located or dimensioned to be below the cylinder block contact surface 68. This advantageously moves the contact forces away from the cylinder block contact surface 68, and therefore away from the abutment, mating surface or parting surface between the bearing cap contact surface 20 and the cylinder block contact surface 68. Furthermore, this positioning or location of the interface contact point 94, 96, provides a void 98, 102 into which material displaced from the interface contact point 94, 96 is displaced. Additionally, the provision of the void 98, 102 may eliminate the need to provide a channel, groove or moat 65, 67 around the base of the pegs 22, 24.

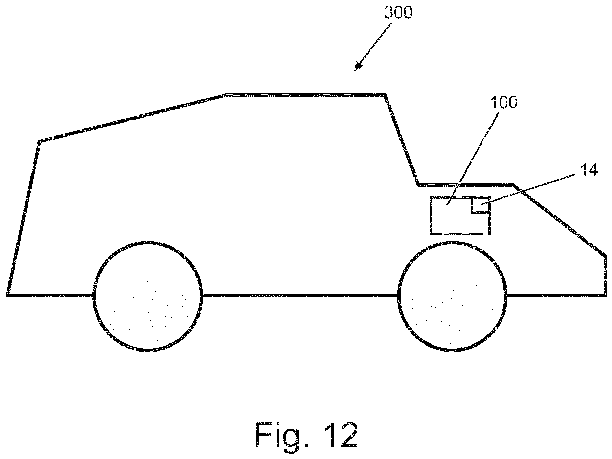

Fig. 12 illustrates a vehicle comprising a bearing cap 14, or the assembly 100 of bearing cap 14 and cylinder block 16 as described above. The bearing cap 14, or the assembly 100 of bearing cap 14 and cylinder block 16 forms part of the internal combustion engine of the vehicle drive system.

Although examples of the present invention have been described in the preceding paragraphs wherein an apparatus or bearing cap 14 comprises relief elements in the form of pegs 22, 24 or other projection means, other examples may provide at least two relief elements in the bearing cap 14 comprising receptacles or apertures at the bearing cap contact surface 20 for positioning the bearing cap 14 on the cylinder block 16 for attachment, wherein each of the at least two receptacles 46, 48 comprises an externally facing contact surface each of which is configured to contact or simultaneously contact a different cooperating relief element of the cylinder block 16 when positioning the bearing cap 14 on the cylinder block 16 for attachment, and an internally facing non-contact surface each of which is configured to not contact or simultaneously not contact or be separated from the respective cooperating relief element of the cylinder block 16 when positioning the bearing cap 14 on the cylinder block 16 for attachment. In such examples, the cooperating relief element at the cylinder block 16 may be projection means 22, 24 such as pegs 22, 24.

In some examples the at least two relief elements are separated by a gap 110, wherein each of the at least two relief elements comprises an externally facing contact surface each of which is configured to contact or simultaneously contact a different cooperating relief element of the structure when positioning the apparatus on the structure for attachment, and an internally facing non-contact surface each of which is configured to not contact, simultaneously not contact or be separated from the respective cooperating relief element of the structure when positioning the apparatus on the structure for attachment, and wherein the externally facing contact surface faces away from the gap 110 and the internally facing non-contact surface faces towards the gap 110.

In the examples above, the apparatus for attachment to the structure, for example the bearing cap 14 for attachment to a cylinder block 16, has been described such that thermal expansion of the apparatus or bearing cap 14 is lower than that of the structure or cylinder block 16 that it is to be attached to. In alternative examples, the thermal expansion of the apparatus or bearing cap 14 may be higher than that of the structure or cylinder block 16. In such circumstances the contact and non-contact surfaces may be switched. Thus, for example, where the thermal expansion of the apparatus or bearing cap 14 is higher than that of the structure or cylinder block 16 the externally facing surface will be a non-contact surface and the internally facing surface will be a non-contact surface.

In some examples, the thermal expansion of the materials may be instigated by the presence of a heat source. In such circumstances each of the at least two pegs 22, 24 comprises a first contact surface each of which is configured to contact or simultaneously contact a different receptacle 46, 48 of the structure when positioning the apparatus on the structure for attachment, and a second non-contact surface each of which is configured to not contact, simultaneously not contact or be separated from the respective receptacle 46, 48 when positioning the apparatus on the structure for attachment, each of the first contact surfaces being positioned to be distal from a heat source and each of the second contact surfaces being positioned to be proximal to a heat source.

In some examples the receptacles 46, 48 may be of a slotted or oversized form, such that pegs 22, 24 of a symmetrical form, such as frustoconical pegs 22, 24, can be provided on the bearing cap 14. The slotted form of the receptacles 46, 48, allows such pegs 22, 24 to have a contact surface and a non-contact surface, as described in the paragraphs above.

Further aspects of the present invention will now be set out in the accompanying numbered paragraphs:
As used herein 'for' should be considered to also include 'configured or arranged to'. For example 'a system for' should be considered to also include 'a system configured or arranged to'.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed. Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. An assembly comprising one or more bearing caps (14) and a cylinder block, wherein each bearing cap comprises:
receiving means (18) for receiving a crankshaft bearing;
contact means (20) for, in use, contacting the cylinder block, and
at least two projection means (22, 24) extending from the contact means for, in use, positioning the bearing cap on the cylinder block for attachment,
wherein each of the projection means comprises an externally facing contact surface (26, 28) and an internally facing non-contact surface (30, 32),
wherein the externally facing contact surface comprises at least a first face of the projection means which is configured to face away from the receiving means, and the internally facing non-contact surface comprises at least a second and distinct face of the projection means which is configured to face towards the receiving means, and
the externally facing contact surface is dimensioned to, in use, contact a different receptacle (46, 48) of the cylinder block when positioning the bearing cap on the cylinder block for attachment, and the internally facing non-contact surface is dimensioned such that, in use, it does not contact the respective receptacle of the cylinder block when positioning the bearing cap on the cylinder block for attachment, and
the externally facing contact surface comprises at least a first portion (36, 38) and second portion (52, 54) such that, for any two projection means separated by the receiving means, the separation of at least the first portion of each externally facing contact surface is smaller than the separation of outer extremities (42, 44) of the receptacles in which, in use, the projection means are received, and the separation of at least the second portion of each externally facing contact surface is larger than the separation of the outer extremities of the receptacles in which, in use, the projection means are received; and
wherein the cylinder block comprises:
a cylinder block contact surface for abutment to the or each contact means, and
for each of the one or more bearing caps, at least two receptacles in the cylinder block contact surface, for receiving the at least two projection means extending from the contact means.

2. An assembly according to claim 1, wherein the receiving means comprises a crankshaft bearing receiving portion, the contact means comprises a bearing cap contact surface and the projection means comprises pegs.

3. An assembly according to claim 1 or claim 2, wherein each of the externally facing contact surfaces is dimensioned to, in use, simultaneously contact a different receptacle of the cylinder block when positioning the bearing cap on the cylinder block for attachment, and each of the internally facing non-contact surfaces is dimensioned such that, in use, they simultaneously do not contact the respective receptacle of the cylinder block when positioning the bearing cap on the cylinder block for attachment.

4. An assembly according to claim 1, wherein the first portion is distal from the contact means and the second portion is proximal to the contact means.

5. An assembly according to any preceding claim, wherein the projection means are tapered from a larger cross section at an interface with the contact means, to a smaller cross section at a free end of the projection means.

6. An assembly according to any preceding claim, wherein the projection means are integral with the contact means.

7. A assembly according to any preceding claim, wherein the contact point between each of the projection means and the respective receptacle, when positioning the bearing cap on the cylinder block for attachment, is at a point on each of the projection means, between a base of the projection means at the interface with the contact surface and the free end of the projection means.

8. An assembly according to any preceding claim, comprising a void which, in use, receives material displaced from a contact point on the cylinder block.

9. An assembly according to any preceding claim, wherein the at least two receptacles each comprise a stepped recess having a first section extending into the cylinder block from the cylinder block contact surface to a first depth and a second section extending further into the cylinder block from a base of the first section, the second section having a smaller cross section than the first section.

10. An assembly according to claim 9, wherein the stepped recess is substantially orthogonal to the cylinder block contact surface.

11. An assembly according to claim 9 or claim 10, wherein the externally facing contact surface of each of the at least two projection means contacts a respective receptacle at an interface contact point comprising a lip between the first section and the second section.

12. An assembly according to any preceding claim, wherein the bearing cap comprises a harder material than that of the cylinder block.

13. A method of assembling the assembly of any preceding claim, the method comprising:
locating the at least two projection means extending from the contact means into the respective receptacles of the cylinder block such that each of the externally facing contact surfaces of the at least two projection means contact the respective receptacle of the cylinder block at a contact point and that each of the internally facing contact surfaces of the at least two projection means are separated from the respective receptacle of the cylinder block, and
applying force to the bearing cap to cause the contact means and cylinder block contact surface to abut such that each of the at least two projection means are forced further into the respective receptacle of the cylinder block, causing displacement of material from the receptacle at the contact point.

14. A vehicle comprising an assembly as claimed in any of claims 1 to 12.

## Patentansprüche

1. Anordnung, die einen oder mehrere Lagerdeckel (14) und einen Zylinderblock umfasst, wobei jeder Lagerdeckel umfasst:
Aufnahmemittel (18) zum Aufnehmen eines Kurbelwellenlagers;
Kontaktmittel (20), um im Gebrauch den Zylinderblock zu berühren, und mindestens zwei Vorsprungmittel (22, 24), die sich von den Kontaktmitteln erstrecken, um im Gebrauch den Lagerdeckel auf dem Zylinderblock zur Befestigung zu positionieren, wobei jedes der Vorsprungmittel eine nach außen weisende Kontaktfläche (26, 28) und eine nach innen weisende berührungsfreie Fläche (30, 32) aufweist, wobei die nach außen weisende Kontaktfläche mindestens eine erste Fläche des Vorsprungmittels umfasst, die so konfiguriert ist, dass sie von den Aufnahmemitteln weg weist, und die nach innen weisende berührungsfreie Fläche mindestens eine zweite und getrennte Fläche der Vorsprungmittel umfasst, die so konfiguriert ist, dass sie den Aufnahmemitteln zugewandt ist, und die nach außen weisende Kontaktfläche so dimensioniert ist, dass sie im Gebrauch eine andere Aufnahme (46, 48) des Zylinderblocks berührt, wenn der Lagerdeckel zur Befestigung auf dem Zylinderblock positioniert wird, und die nach innen weisende berührungsfreie Fläche so dimensioniert ist, dass sie im Gebrauch die jeweilige Aufnahme des Zylinderblocks nicht berührt, wenn der Lagerdeckel zur Befestigung auf dem Zylinderblock positioniert wird, und die nach außen weisende Kontaktfläche mindestens einen ersten Abschnitt (36, 38) und einen zweiten Abschnitt (52, 54) umfasst, so dass bei zwei beliebigen, durch die Aufnahmeeinrichtung getrennten Vorsprungmitteln der Abstand mindestens des ersten Abschnitts jeder nach außen weisenden Kontaktfläche kleiner ist als der Abstand der äußeren Enden (42, 44) der Aufnahmen, in denen im Gebrauch die Vorsprungmittel aufgenommen sind, und der Abstand mindestens des zweiten Abschnitts jeder nach außen weisenden Kontaktfläche größer ist als der Abstand der äußeren Enden der Aufnahmen, in denen im Gebrauch die Vorsprungmittel aufgenommen sind; und
wobei der Zylinderblock umfasst:
eine Zylinderblock-Kontaktfläche zum Anstoßen an das oder jedes Kontaktmittel, und für jeden der einen oder mehreren Lagerdeckel mindestens zwei Aufnahmen in der Zylinderblock-Kontaktfläche zur Aufnahme der mindestens zwei von den Kontaktmitteln ausgehenden Vorsprünge.

2. Anordnung nach Anspruch 1, wobei die Aufnahmemittel einen Kurbelwellenlager-Aufnahmeabschnitt, die Kontaktmittel eine Lagerdeckel-Kontaktfläche und die Vorsprungmittel Zapfen umfassen.

3. Anordnung nach Anspruch 1 oder 2, wobei jede der nach außen weisenden Kontaktflächen so dimensioniert ist, dass sie im Gebrauch gleichzeitig eine andere Aufnahme des Zylinderblocks berührt, wenn der Lagerdeckel zur Befestigung auf dem Zylinderblock positioniert wird, und jede der nach innen weisenden berührungsfreien Flächen so dimensioniert ist, dass sie im Gebrauch nicht gleichzeitig die jeweilige Aufnahme des Zylinderblocks berührt, wenn der Lagerdeckel zur Befestigung auf dem Zylinderblock positioniert wird.

4. Anordnung nach Anspruch 1, wobei der erste Abschnitt distal zu den Kontaktmitteln und der zweite Abschnitt proximal zu den Kontaktmitteln liegt.

5. Anordnung nach einem der vorhergehenden Ansprüche, wobei sich die Vorsprungmittel von einem größeren Querschnitt an einer Schnittstelle mit den Kontaktmitteln zu einem kleineren Querschnitt an einem freien Ende der Vorsprungmittel verjüngen.

6. Anordnung nach einem der vorhergehenden Ansprüche, wobei die Vorsprungmittel mit den Kontaktmitteln aus einem Stück gebildet sind.

7. Anordnung nach einem der vorhergehenden Ansprüche, wobei der Berührungspunkt zwischen jedem der Vorsprungmittel und der jeweiligen Aufnahme beim Positionieren des Lagerdeckels auf dem Zylinderblock zur Befestigung an einem Punkt auf jedem der Vorsprungmittel zwischen einem Boden des Vorsprungmittels an der Schnittstelle mit der Kontaktfläche und dem freien Ende des Vorsprungmittels liegt.

8. Anordnung nach einem der vorhergehenden Ansprüche, die einen Hohlraum aufweist, der im Gebrauch Material aufnimmt, das von einem Berührungspunkt am Zylinderblock verdrängt wird.

9. Anordnung nach einem der vorhergehenden Ansprüche, wobei die mindestens zwei Aufnahmen jeweils eine gestufte Aussparung mit einem ersten Bereich, der sich von der Zylinderblock-Kontaktfläche bis zu einer ersten Tiefe in den Zylinderblock hinein erstreckt, und einem zweiten Bereich, der sich von einem Boden des ersten Bereichs weiter in den Zylinderblock hinein erstreckt, umfassen, wobei der zweite Bereich einen kleineren Querschnitt als der erste Bereich aufweist.

10. Anordnung nach Anspruch 9, wobei die gestufte Aussparung im Wesentlichen orthogonal zur Zylinderblock-Kontaktfläche verläuft.

11. Anordnung nach Anspruch 9 oder 10, wobei die nach außen weisende Kontaktfläche jeder der mindestens zwei Vorsprungmittel eine jeweilige Aufnahme an einem Schnittstellen-Berührungspunkt berührt, der eine Lippe zwischen dem ersten Bereich und dem zweiten Bereich umfasst.

12. Anordnung nach einem der vorhergehenden Ansprüche, wobei der Lagerdeckel ein härteres Material als das des Zylinderblocks umfasst.

13. Verfahren zum Zusammenbau der Anordnung nach einem der vorhergehenden Ansprüche, wobei das Verfahren umfasst:
Platzieren der mindestens zwei Vorsprungmittel, die sich von den Kontaktmitteln in die jeweiligen Aufnahmen des Zylinderblocks erstrecken, so dass jede der nach außen weisenden Kontaktflächen der mindestens zwei Vorsprungmittel die jeweilige Aufnahme des Zylinderblocks an einem Berührungspunkt berührt und dass jede der nach innen weisenden Kontaktflächen der mindestens zwei Vorsprungmittel von der jeweiligen Aufnahme des Zylinderblocks getrennt ist, wobei das Aufbringen einer Kraft auf den Lagerdeckel bewirkt, dass die Kontaktmittel und die Kontaktfläche des Zylinderblocks aneinanderstoßen, so dass jedes der mindestens zwei Vorsprungmittel tiefer in die jeweilige Aufnahme des Zylinderblocks gedrückt wird, was eine Verschiebung von Material aus der Aufnahme am Berührungspunkt bewirkt.

14. Fahrzeug, umfassend eine Anordnung nach einem der Ansprüche 1 bis 12.

## Revendications

1. Ensemble comprenant un ou plusieurs chapeaux de palier (14) et un bloc cylindres, dans lequel chaque chapeau de palier comprend :
un moyen de réception (18) destiné à recevoir un palier de vilebrequin ;
un moyen de contact (20) destiné, lors de l'utilisation, à entrer en contact avec le bloc cylindres, et
au moins deux moyens de projection (22, 24) s'étendant depuis le moyen de contact destiné, lors de l'utilisation, à positionner le chapeau de palier sur le bloc cylindres pour la fixation,
dans lequel chacun parmi les moyens de projection comprend une surface de contact tournée vers l'extérieur (26, 28) et une surface sans contact tournée vers l'intérieur (30, 32),
dans lequel la surface de contact tournée vers l'extérieur comprend au moins une première face des moyens de projection qui est conçue pour être orientée à l'opposé à partir du moyen de réception, et la surface sans contact tournée vers l'intérieur comprend au moins une seconde face distincte des moyens de projection qui est conçue pour être tournée vers le moyen de réception, et
la surface de contact tournée vers l'extérieur est dimensionnée pour, lors de l'utilisation, contacter un réceptacle différent (46, 48) du bloc cylindres lors du positionnement du chapeau de palier sur le bloc cylindres pour la fixation, et la surface sans contact tournée vers l'intérieur est dimensionnée de telle sorte que, lors de l'utilisation, elle n'entre pas en contact avec le réceptacle respectif du bloc cylindres lors du positionnement du chapeau de palier sur le bloc cylindres pour la fixation, et
la surface de contact tournée vers l'extérieur comprend au moins une première partie (36, 38) et une seconde partie (52, 54) de telle sorte que, pour chacun des deux moyens de projection séparés par le moyen de réception, la séparation d'au moins la première partie de chaque surface de contact tournée vers l'extérieur est plus petite que la séparation des extrémités extérieures (42, 44) des réceptacles dans lesquels, lors de l'utilisation, les moyens de projection sont reçus, et la séparation d'au moins la seconde partie de chaque surface de contact tournée vers l'extérieur est plus grande que la séparation des extrémités extérieures des réceptacles dans lesquels, lors de l'utilisation, les moyens de projection sont reçus ; et
dans lequel le bloc cylindres comprend :
une surface de contact de bloc cylindres destinée à venir en butée sur le ou chaque moyen de contact, et
pour chacun parmi le ou les chapeaux de palier, au moins deux réceptacles dans la surface de contact du bloc cylindres, destinés à recevoir lesdits au moins deux moyens de projection s'étendant depuis le moyen de contact.

2. Ensemble selon la revendication 1, dans lequel le moyen de réception comprend une partie de réception de palier de vilebrequin, le moyen de contact comprend une surface de contact de chapeau de palier et les moyens de projection comprennent des chevilles.

3. Ensemble selon la revendication 1 ou la revendication 2, dans lequel chacune des surfaces de contact tournée vers l'extérieur est dimensionnée pour, lors de l'utilisation, entrer en contact simultanément avec un réceptacle différent du bloc cylindres lors du positionnement du chapeau de palier sur le bloc cylindres pour la fixation, et chacune parmi les surfaces sans contact tournée vers l'intérieur sont dimensionnées de telle sorte que, lors de l'utilisation, elles n'entrent pas en contact simultanément avec le réceptacle respectif du bloc cylindres lors du positionnement du chapeau de palier sur le bloc cylindres pour la fixation.

4. Ensemble selon la revendication 1, dans lequel la première partie est distale du moyen de contact et la seconde partie est proximale du moyen de contact.

5. Ensemble selon l'une quelconque des revendications précédentes, dans lequel les moyens de projection sont coniques à partir d'une section transversale plus grande au niveau d'une interface avec le moyen de contact, vers une section transversale plus petite à une extrémité libre des moyens de projection.

6. Ensemble selon l'une quelconque des revendications précédentes, dans lequel les moyens de projection sont d'une seule pièce avec le moyen de contact.

7. Ensemble selon l'une quelconque des revendications précédentes, dans lequel le point de contact entre chacun parmi les moyens de projection et le réceptacle respectif, lors du positionnement du chapeau de palier sur le bloc cylindres pour la fixation, se trouve en un point sur chacun parmi les moyens de projection, entre une base des moyens de projection à l'interface avec la surface de contact et l'extrémité libre des moyens de projection.

8. Ensemble selon l'une quelconque des revendications précédentes, comprenant un vide qui, lors de l'utilisation, reçoit du matériau déplacé à partir d'un point de contact sur le bloc cylindres.

9. Ensemble selon l'une quelconque des revendications précédentes, dans lequel lesdits au moins deux réceptacles comprennent chacun un évidement en gradins présentant une première section s'étendant dans le bloc cylindres depuis la surface de contact du bloc cylindres jusqu'à une première profondeur et une seconde section s'étendant plus loin dans le bloc cylindres à partir d'une base de la première section, la seconde section présentant une section transversale plus petite que la première section.

10. Ensemble selon la revendication 9, dans lequel l'évidement en gradins est sensiblement orthogonal à la surface de contact du bloc cylindres.

11. Ensemble selon la revendication 9 ou la revendication 10, dans lequel la surface de contact tournée vers l'extérieur de chacun desdits au moins deux moyens de projection entre en contact avec un réceptacle respectif à un point de contact d'interface comprenant une lèvre entre la première section et la seconde section.

12. Ensemble selon l'une quelconque des revendications précédentes, dans lequel le chapeau de palier comprend un matériau plus dur que celui du bloc cylindres.

13. Procédé d'assemblage de l'ensemble selon l'une quelconque des revendications précédentes, le procédé comprenant :
la localisation desdits au moins deux moyens de projection s'étendant depuis le moyen de contact dans les réceptacles respectifs du bloc cylindres de telle sorte que chacune des surfaces de contact tournée vers l'extérieur desdits au moins deux moyens de projection entre en contact avec le réceptacle respectif du bloc cylindres en un point de contact et que chacune des surfaces de contact tournée vers l'intérieur desdits au moins deux moyens de projection est séparée du réceptacle respectif du bloc cylindres, et
l'application d'une force au chapeau de palier pour amener le moyen de contact et la surface de contact du bloc cylindres à buter de telle sorte que chacun desdits au moins deux moyens de projection sont forcés plus loin dans le réceptacle respectif du bloc cylindres, provoquant un déplacement de matière du réceptacle au point de contact.

14. Véhicule comprenant un ensemble selon l'une quelconque des revendications 1 à 12.
